# EUROPEAN PATENT SPECIFICATION

(11) **EP 2 689 517 B1**
(45) Date of publication and mention of the grant of the patent: **27.05.2015**
(21) Application number: 11712209.3
(22) Date of filing: 22.03.2011
(51) Int. Cl.: H02K 5/22, H02K 11/00, H02K 37/00

(54) **ADAPTER PLATE WITH PRESS FIT CONTACTS**
KUPPLUNGSELEMENT MIT EINPRESSKONTAKTEN
ADAPTATEUR AVEC DES CONTACTS INSÉRÉE À FORCE

(43) Date of publication of application: 29.01.2014
(73) Proprietor: Juken Swiss Technology AG, 2540 Grenchen (CH)
(72) Inventor: JONES, Peter, 6828 Balerna (CH); ESPOSITO, Rodolfo, 2013 Colombier (CH)
(74) Representative: Veni Swiss & European Patent Attorneys
(86) International application number: PCT/EP2011/054319
(87) International publication number: WO 2012/126516

(56) References cited:
- WO-A2-2005/058664
- DE-A1- 4 209 823
- DE-A1- 10 212 721
- GB-A- 2 221 102
- US-A- 5 734 140
- US-A1- 2007 205 038

## Description

### TECHNICAL FIELD

The present invention relates to an adapter for connecting a motor or an actuator to a printed circuit board (PCB). More specifically, the adapter in accordance with the present invention can be used, in particular, to connect miniature stepper motors for automotive instrumentation applications to the cluster's PCB. The invention likewise relates to a method of connecting a motor to a PCB. The invention also relates to an assembly comprising the adapter, the motor and the PCB.

### BACKGROUND OF THE INVENTION

Traditionally miniature stepper motors have been connected directly to a PCB. The electronic and mechanical connection can be obtained by, for instance, soldering the connectors of the motor to the PCB. Another connection method called press-fitting also exists, which does not require soldering, and allows electrical and mechanical connection by mechanical deformation of a connector in a drill hole of the PCB.

Miniature stepper motors can be used for many purposes, such as automotive instrumentation applications. Stepper motors (or step motors) are brushless, synchronous electric motors that can divide a full rotation into a large number of steps. The motor's position can be controlled precisely without any feedback mechanism, as long as the motor is carefully sized to the application.

The PCB and stepper motor assembly is often subjected to potentially considerable vibrations, and thus connecting the stepper motor directly to the PCB is not optimal. The cluster manufacturer positions all of the surface-mounted PCB components through automatic pick and place technology, and then the oven bonds these components to the PCB. An exception is usually made for the stepper motor as it is not a surface-mounted device (SMD), and has to be manually inserted and often manually soldered to the PCB. This operation costs the manufacturer time and money, and inserts a manual process into the automatic assembly.

DE 42 09 823 discloses a housing of a motor enclosing a rotor and two coaxial stators. Two connection pins on each stator protrude from the end of the housing, and each is surrounded completely by a connection peg of equal length. Together with a square section guide these components form a plug unit which mates with a corresponding socket on a clutch part when the latter is fitted and secured by the engagement of reciprocal hooks. In this solution the motor is separable from the clutch part which makes the electrical connection to the control unit automatically when assembled into the housing. However, the clutch part is soldered to a circuit board, which makes the removal of the clutch part difficult.

It is the aim of the present invention to provide a solution that overcomes the above-identified shortcomings.

### SUMMARY OF THE INVENTION

According to a first aspect of the invention, an adapter for a motor is provided as recited in claim 1.

The proposed adapter has many advantages. The adapter according to the present invention is reusable. The adapter can be pressed into the surface of the PCB, and it can be easily removed from the PCB, if necessary, by lifting the adapter from PCB. The adapter has also mechanical, easy-to-use holding means for the motor. The adapter can also have a spring for eliminating any play between the motor and the adapter.

Furthermore, the use of the adapter allows the cluster manufacturer to integrate the stepper motor into the automatic pick and place environment.

Once positioned and pressed into the PCB, the adapter is ready for use. The motor can be clipped into the adapter at any time or phase of the assembly process. The motor can also be easily removed and replaced, if necessary.

According to a second aspect of the invention, an assembly comprising the adapter according to the first aspect and further comprising a motor and a PCB is provided as recited in claim 11.

According to a third aspect of the invention, a method of attaching a motor to a printed circuit board is provided as recited in claim 14.

Other aspects of the invention are recited in the dependent claims attached hereto.

### BRIEF DESCRIPTION OF THE DRAWINGS

Other features and advantages of the invention will become apparent from the following description of a non-limiting exemplary embodiment, with reference to the appended drawings, in which:
- Figure 1 is a perspective view, showing the adapter from the motor-facing side, in accordance with an embodiment of the present invention;
- Figure 2 is a perspective view, showing the adapter from the board-facing side, in accordance with an embodiment of the present invention;

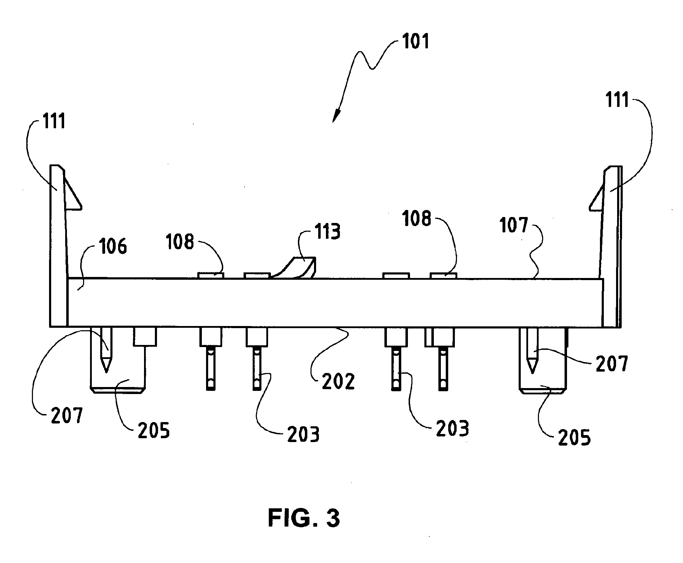

- Figure 3 is a side view of the adapter of Figures 1 and 2; and
- Figure 4 is a perspective view showing an assembly comprising the adapter of Figures 1-3, a motor and a PCB.

### DETAILED DESCRIPTION OF EMBODIMENTS OF THE INVENTION

One embodiment of the present invention will be described in the following in more detail with reference to the attached figures. This embodiment of the present invention is described in the context of an adapter for stepper motors, but the invention is not limited to the adapters for stepper motors.

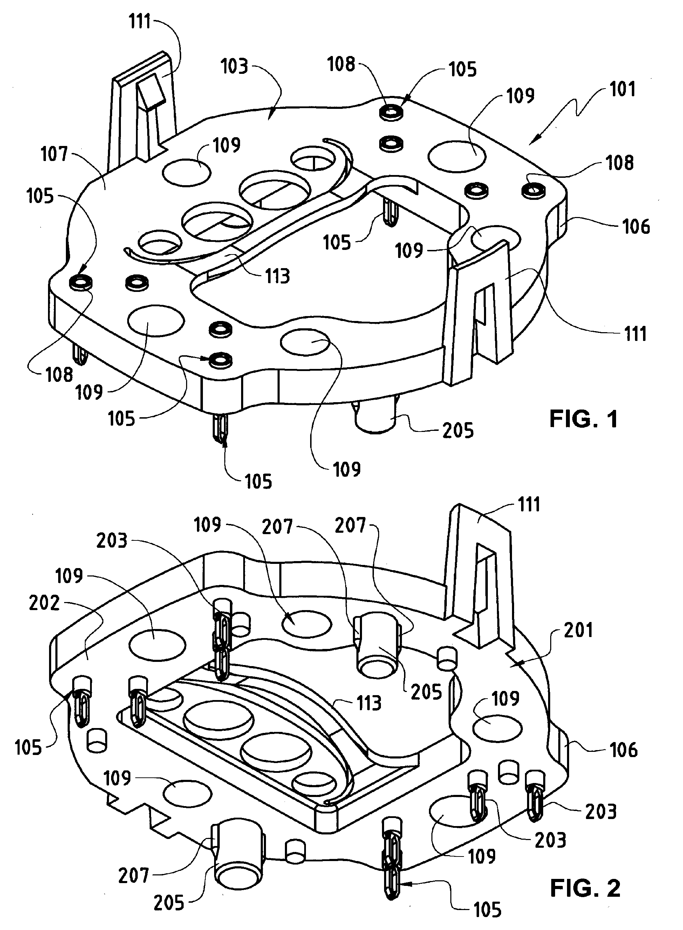

Figure 1 shows in a perspective view an exemplary embodiment of the adapter 101 seen from the motor-facing side 103. Figure 2 shows the same adapter, but shown from the PCB-facing side 201. The proposed adapter 101 can be used for connecting automotive stepper motors to a PCB. The method is based on the use of press fit contacts on the board-facing side 201, as will be explained later in more detail. The material used for the adapter 101 can be, for example, TV4 260 S Polybutylene Terephthalate (PBT).

A plurality of electrical and mechanical connectors 105, in this example eight, traverse the base 106 of the adapter 101 laterally, i.e. from the motor-facing surface 107 to the board-facing surface 202. The motor-facing end of the connectors 105 is a female contact, called tulip contact 108. The motor then has male connection pins, which allow the motor to be electrically and mechanically connected by insertion in the tulip contact 108 without any trauma for the motor. The tulip contact 108 has a hollow interior for receiving the connection pins. The hollow interior comprises contact areas for making an electrical and mechanical contact. The main difference between a normal female contact and a tulip contact is that the normal contact has two contact areas, whereas the tulip contact has five contact areas. The five contact areas have a greater mechanical holding force and assure a better electrical contact force than the two contact solution. The tulip contact part of the connector 105 may or may not extend from the motor-facing side 103 beyond the board-facing surface 202.

Figure 2 shows the adapter 101 from the bottom, i.e. from the board-facing side 201. From this figure, the other end of the connectors 105 that pass through the adapter 101 via drill holes can be clearly seen. The board-facing end of the connectors 105 is a press fit contact 203. This means that the adapter 101 can be simply pressed into the PCB. The attachment guarantees a good electrical and mechanical connection. This end of the connectors 105 is thus arranged to pass through the PCB, which has through-plated holes, and the diameter of the holes matches the press fit pins 203. A tight connection is obtained by shaping the press fit contact 203 so that it is slightly deviated in size from the nominal dimension when it is inserted into the hole in the PCB. The degree of tightness can be adjusted based on the amount of the deviation. Thus, a fastening between the press fit contact 203 and the hole in the PCB is achieved by friction.

In the illustrated example, the press fit contact 203 has two fingers with a space between the fingers. The size of the space is adjusted when inserting the press fit contact 203 into the PCB. For facilitating the insertion of the press fit contacts into the holes in the PCB, the space between the fingers is minimal at the end of the fingers. The ends of the fingers could also be completely merged. The illustrated press fit contacts due to a modified "eye-of-a-needle" design have the following advantages:
- Large tolerance acceptability;
- Precision machining possible, gas-tight electrical connections;
- Low insertion force;
- Wide selection of dimensions and geometry;
- Low mechanical stress on PCB;
- Good repair capabilities (up to 3 insertion / extraction cycles); and
- No damage to PCB through-hole plating.

The ends of the holes in the PCB can be chamfered. The chamfer forms a guide for the press fit contacts 203 helping (a) to distribute the force evenly around the circumference of the hole, (b) to allow the compression to occur gradually instead of all at once, thus helping the pressing operation to be smoother, to be more easily controlled, and to require less power (less force at any one instant of time), and (c) to assist in aligning the pin parallel with the hole it is being pressed into.

The adapter 101 has also guide holes 109 for motor centring pegs. These holes help to guide the motor in place on the motor-facing surface 107 of the adapter 101. Furthermore, the holes guarantee that the motor cannot be reversely attached to the adapter 101. On the board-facing surface 202 there are provided guide pegs 205 for guiding the adapter 101 to the PCB. These guide pegs 205 protrude from the board-facing surface 202. In this example, the adapter 101 has two guide pegs 205, but of course the adapter can have any other number of guide pegs. These pegs 205 are used to guide the adapter to the PCB and not to allow reverse attachment. These guide pegs 205 allow automatic pick and place positioning when assembling different components to the PCB. The guide pegs 205 have ribs 207 that are in this example made of plastic, and can deform when putting the adapter onto the PCB. Thus, the adapter 101 can be held firmly with respect to the PCB during the positioning phase of the adapter 101.

The adapter has also a play eliminating means 113, which is in this example a spring. The purpose of this spring 113 is to eliminate any play between the motor and the adapter motor-facing surface 107. The essentially flat bottom surface of the motor is arranged to come into contact with this spring 113. Thus, the spring is arranged to move vertically with respect to the plane defined by the motor-facing surface 107. On the adapter 101 there are further provided means 111 for holding the motor. These holding means are in this example clips 111. The motor is arranged to go slightly deeper than the clips 111 in order for the clips 111 to close properly. The horizontal plane is assured to be free of play due to the clips 111, the connectors 105 and the guide holes 109 together with the motor-centring pegs. The vertical plane is held under control by the spring 113 as the clips 111, the motor-centring pegs and the connectors 105 move vertically. The large through hole in the middle of the adapter 101 is where the shaft of the motor is arranged to come out if the shaft is located on the bottom surface of the motor.

When putting the adapter onto the PCB, the adapter press fit contacts 203 can be simply pressed into the holes in the PCB. The use of the adapter 101 allows the cluster manufacturer to integrate the stepper motor into the automatic pick and place environment. Once positioned and fitted, the adapter 101 is ready for use. The motor can be clipped into the adapter 101 at any time or phase of the assembly process. The adapter 101 in accordance with the present invention can be fitted together with all of the other cluster components, and then run through an oven for bonding the cluster components. Therefore, the adapter 101 in accordance with the present invention withstands pressures and/or temperatures which the motor cannot. This means that the customer can fit the motor to the PCB, and manual operation is not required. Many cluster manufacturers mount the cluster components in one location, and then assemble the cluster in another. By doing so, the motor shaft is exposed in traditional methods to possible damage, and requires special packaging. However, with the adapter solution in accordance with the present invention, the motor can be simply popped into place during the final assembly.

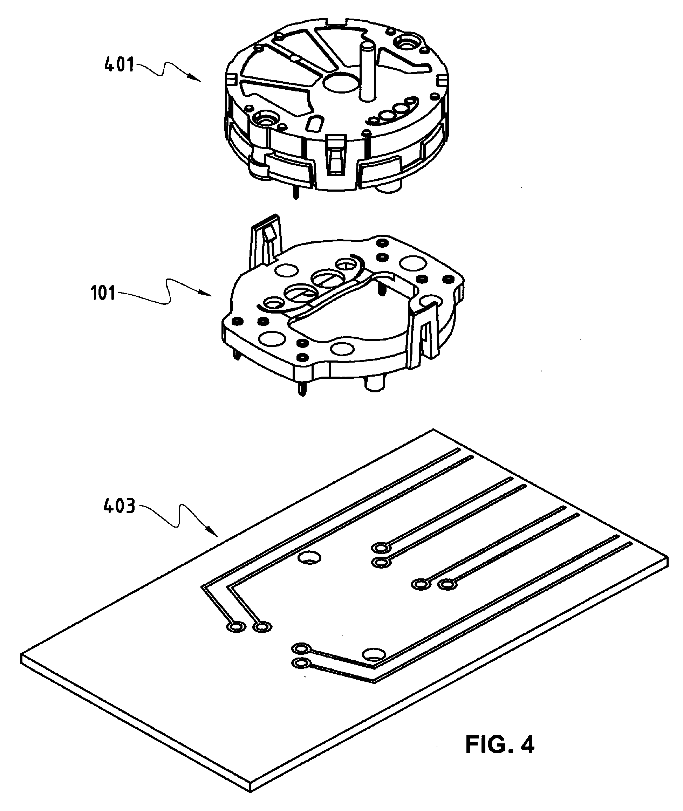

In the most common implementations, the adapter 101 is available in a 4 or 8 contact version, front or rear contacts (referring to the motor contacts). The adapter 101 of the present invention is suitable to be used with motors with front or rear contacts. The motor can also be removed and replaced, if necessary. Figure 4 shows the assembly before being assembled. The assembly comprises the motor 401, the adapter 101 and the PCB 403.

While the invention has been illustrated and described in detail in the drawings and foregoing description, such illustration and description are to be considered illustrative or exemplary and not restrictive.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An adapter (101) for connecting a motor (401) to a printed circuit board (403), the adapter (101) comprising:
• a base (106) having a motor-facing side (103) and a board-facing side (201);
• motor holding means (111) on the motor-facing side (103) of the base (106); and
• a plurality of electrical and mechanical connectors (105) for making an electrical and mechanical contact with the motor,
the adapter being **characterised in that** the plurality of electrical and mechanical connectors (105) pass through the base (106) from the motor-facing side (103) to the board-facing side (201), and wherein the connectors (105) on the board-facing side (201) are press fit contacts (203) protruding from the surface (202) of the base (106) on the board-facing side (201).

2. An adapter according to claim 1, wherein the base (106) further comprises a spring (113).

3. An adapter according to claim 2, wherein the spring (113) is arranged to move vertically with respect to the plane defined by the surface (107) of the base (106) on the motor-facing side (103).

4. An adapter according to any of the preceding claims, wherein the surface (107) of the base (106) on the motor-facing side (103) contains at least one motor guiding hole (109).

5. An adapter according to any of the preceding claims, wherein the motor holding means are clips (111).

6. An adapter according to any one of the preceding claims, wherein the surface (202) of the base (106) on the board-facing side (201) comprises at least one adapter guide peg (205).

7. An adapter according to claim 6, wherein the adapter guide pegs (205) comprise elastically deformable ribs (207).

8. An adapter according to claim 6 or 7, wherein the press fit contacts (203) extend further away from the base (106) than the guide pegs (205).

9. An adapter according to any one of the preceding claims, wherein the connectors (105) on the motor-facing side (103) are tulip contacts (108).

10. An adapter according to claim 9, wherein the tulip contacts (108) have a hollow interior part, and the hollow part does not extend beyond the surface (202) of the base (106) on the board-facing side (201).

11. An assembly comprising the adapter (101) according to any one of the preceding claims, and further comprising a motor (401) arranged to be attached to the motor-facing side (103) of the adapter (101) and being arranged to be mechanically and electrically connected with the adapter (101), and further comprising a printed circuit board (403) for receiving the adapter (101), and wherein the adapter (101) is mechanically and electrically connected to the printed circuit board (403).

12. An assembly according to claim 11, wherein the adapter (101) is press fit mounted onto the printed circuit board (403).

13. An assembly according to any one of claims 11 or 12, wherein the printed circuit board (403) has through plated holes for receiving the press fit contacts (203).

14. A method of attaching a motor (401) to a printed circuit board (403), the method comprising press-fitting the adapter (101) according to any one of the claims 1 to 10 onto the printed circuit board (403) and putting the motor onto the surface (107) of the base (106) on the motor-facing side (103) by use of the motor holding means.

## Patentansprüche

1. Ein Adapter (101) zum Verbinden eines Motors (401) an eine Leiterplatte (403), der Adapter (101) aufweisend:
• eine Basis (106) mit einer Motorseite (103) und einer Plattenseite (201);
• Motorhaltemittel (111) auf der Motorseite (103) der Basis (106); und
• eine Mehrzahl von elektrischen und mechanischen Anschlüssen (105) zur elektrischen und mechanischen Verbindung mit dem Motor,
**dadurch gekennzeichnet, dass** die Mehrzahl von elektrischen und mechanischen Anschlüssen (105) sich durch die Basis (106) von der Motorseite (103) zur Plattenseite (201) erstrecken, wobei die Anschlüsse (105) auf der Plattenseite (201) Einpressanschlüsse (203) sind, die von der auf der Plattenseite (201) liegenden Oberfläche (202) der Basis (106) ausragen.

2. Ein Adapter gemäß dem Anspruch 1, wobei die Basis (106) ferner eine Feder (113) aufweist.

3. Ein Adapter gemäß dem Anspruch 2, wobei die Feder (113) senkrecht in Bezug auf die durch die auf der Motorseite (103) liegende Oberfläche der Basis (106) definierte Ebene bewegbar angeordnet ist.

4. Ein Adapter gemäß einem der vorherigen Ansprüche, wobei die auf der Motorseite (103) der Basis (106) liegende Oberfläche (107) mindestens ein Loch (109) zur Führung des Motors enthält.

5. Ein Adapter gemäß einem der vorherigen Ansprüche, wobei die Motorhaltemittel Klipps (111) sind.

6. Ein Adapter gemäß einem der vorherigen Ansprüche, wobei die auf der Plattenseite (201) liegende Oberfläche (202) der Basis (106) mindestens einen Zapfen (205) zur Führung des Adapters aufweist.

7. Ein Adapter gemäß dem Anspruch 6, wobei die den Adapter führenden Zapfen (205) elastisch verformbare Rippen (207) aufweisen.

8. Ein Adapter gemäß dem Anspruch 6 oder 7, wobei die Einpressanschlüsse (203) sich weiter aus der Basis (106) als die den Adapter führenden Zapfen (205) ausragen.

9. Ein Adapter gemäß einem der vorherigen Ansprüche, wobei die auf der Motorseite (103) liegenden Anschlüsse (105) Tulpenanschlüsse (108) sind.

10. Ein Adapter gemäß dem Anspruch 9, wobei die Tulpenanschlüsse (108) jeweils einen hohlen inneren Teil aufweisen, wobei der hohle Teil sich über die auf der Plattenseite (201) der Basis (106) liegende Oberfläche (202) nicht ausragt.

11. Eine Anordnung, aufweisend: den Adapter (101) gemäß einem der vorherigen Ansprüche; einen Motor, welcher (401) angeordnet ist, um mit der Motorseite (103) des Adapters (101) befestigt und mechanisch und elektrisch mit dem Adapter (101) verbunden zu werden; und eine Leiterplatte (403) zum Aufnehmen des Adapters (101), wobei der Adapter (101) mechanisch und elektrisch mit der Leiterplatte (403) verbunden ist.

12. Eine Anordnung gemäß dem Anspruch 11, wobei der Adapter (101) durch Press-Fit auf der Leiterplatte (403) montiert ist.

13. Eine Anordnung gemäß einem der Ansprüche 11 oder 12, wobei die Leiterplatte (403) durchplattierte Löcher zum Aufnehmen der Einpressanschlüsse (203) hat.

14. Ein Verfahren zum Befestigen eines Motors (401) auf einer Leiterplatte (403), das Verfahren aufweisend: Einpressen des Adapters (101) gemäß einem der Ansprüche 1 bis 10 auf der Leiterplatte (403) und Stellen des Motors auf die auf der Motorseite (106) der Basis (106) liegende Oberfläche (107) mittels der Motorhaltemittel.

## Revendications

1. Un adaptateur (101) pour connecter un moteur (401) à une carte de circuit imprimé (403), l'adaptateur (101) comprenant:
• une base (106) ayant un côté (103) de moteur et un côté (201) de carte;
• des moyens (111) sur le côté (103) de moteur de la base (106) pour tenir le moteur; et
• une pluralité de connecteurs (105) électriques et mécaniques pour établir un contact électrique et mécanique avec le moteur,
l'adaptateur étant **caractérisé en ce que** la pluralité de connecteurs (105) électriques et mécaniques traversent la base (106) du côté (103) de moteur au côté (201) de carte, et dans lequel les connecteurs (105) sur le côté (201) de carte sont des contacts (203) à insertion à force faisant saillie de la surface (202) de la base (106) du côté (201) de carte.

2. Un adaptateur selon la revendication 1, dans lequel la base (106) comprend de plus un ressort (113).

3. Un adaptateur selon la revendication 2, dans lequel le ressort (113) est agencé pour bouger verticalement par rapport à un plan défini par la surface (107) de la base (106) du côté (103) de moteur.

4. Un adaptateur selon l'une quelconque des revendications précédentes, dans lequel la surface (107) de la base (106) du côté (103) de moteur contient au moins un trou (109) pour guider le moteur.

5. Un adaptateur selon l'une quelconque des revendications précédentes, dans lequel les moyens (111) pour tenir le moteur sont des clips (111).

6. Un adaptateur selon l'une quelconque des revendications précédentes, dans lequel la surface (202) de la base (106) du côté (201) de carte comprend au moins un piquet (205) de guidage d'adaptateur.

7. Un adaptateur selon la revendication 6, dans lequel les piquets (205) de guidage d'adaptateur comprennent des nervures (207) déformables élastiquement.

8. Un adaptateur selon la revendication 6 ou 7, dans lequel les piquets (205) de guidage s'étendent plus loin de la base (106) que les piquets (205) de guidage.

9. Un adaptateur selon l'une quelconque des revendications précédentes, dans lequel les connecteurs sur le côté de moteur sont des contacts (108) de tulipe.

10. Un adaptateur selon la revendication 9, dans lequel les contacts (108) de tulipe ont une partie intérieure creuse, et la partie creuse ne s'étend pas au-delà de la surface (202) de la base (106) sur le côté de carte (201).

11. Un assemblage comprenant l'adaptateur (101) selon l'une quelconque des revendications précédentes, et comprenant de plus un moteur (401) arrangé pour être attaché au côté (103) de moteur de l'adaptateur (101) et étant arrangé pour être connecté mécaniquement et électriquement avec l'adaptateur (101), et comprenant de plus une carte de circuit imprimé (403) pour recevoir l'adaptateur (101) et dans lequel l'adaptateur (101) est connecté mécaniquement et électriquement à la carte de circuit imprimé (403).

12. Un assemblage selon la revendication 11, dans lequel l'adaptateur (101) est monté par insertion à force à la carte de circuit imprimé (403).

13. Un assemblage selon l'une quelconque des revendications 11 ou 12, dans lequel la carte de circuit imprimé (403) comprend des trous traversants plaqués pour recevoir les contacts (203) à insertion à force.

14. Un procédé pour attacher un moteur (401) à une carte de circuit imprimé (403), le procédé comprenant le montage par insertion à force de l'adaptateur (101) selon l'une quelconque des revendications 1 à 10 sur la carte de circuit imprimé (403) et le placement du moteur sur la surface (107) de la base (106) sur le côté (103) de moteur en utilisant les moyens pour tenir le moteur.
